# EUROPÄISCHE PATENTSCHRIFT

(11) **EP 2 312 175 B1**
(45) Veröffentlichungstag und Bekanntmachung des Hinweises auf die Patenterteilung: **14.05.2014**
(21) Anmeldenummer: 10175530.4
(22) Anmeldetag: 07.09.2010
(51) Int. Cl.: F16C 33/60, F16C 33/64

(54) **Ring für ein Wälzlager und Verfahren zu seiner Herstellung**
Ring for a rolling bearing and its manufacturing method
Bague pour roulement et son procédé de fabrication

(30) Priorität: 16.09.2009 DE 102009041762
(43) Veröffentlichungstag der Anmeldung: 20.04.2011
(73) Patentinhaber: Aktiebolaget SKF, 41 550 Göteborg (SE)
(72) Erfinder: Eich, Bernd, 97727 Fuchsstadt (DE)
(74) Vertreter: Schonecke, Mitja

(56) Entgegenhaltungen:
- DE-A1- 1 527 526
- GB-A- 258 809
- JP-A- 2009 162 271
- JP-U- 355 115 435
- US-A- 1 921 488

## Beschreibung

Die vorliegende Erfindung betrifft einen Ring für ein Wälzlager und ein Verfahren zu seiner Herstellung.

Es ist bekannt, Lagerringe von Wälzlagern in axialer Richtung zu schneiden, um so beispielsweise zwei Ringhälften zu erhalten, die sich einfach montieren lassen. So ist insbesondere bei komplexen Einbau- und Montagesituationen eine Montage überhaupt erst möglich. Dies ist beispielsweise bei gelagerten Wellen der Fall, bei denen die axiale Zugänglichkeit zur Montage des Lagers nicht gegeben ist und der Satz Wälzkörper die Lagerringe nicht axial aufgeschoben werden können. Hier ist es erforderlich, den oder die Lagerringe und den Käfig geteilt auszuführen.

Die Teilung der Lagerringe erfolgt beispielsweise durch Erzeugen zweier, sich radial gegenüberliegender Schnitte mittels einem Draht oder Laser. Durch den Schnittvorgang und das nachfolgende Zusammenfügen bei der Montage entstehen an den Berührungsflächen der Ringteile Übergänge, über die die Wälzkörper beim Betrieb des Lagers abwälzen. Je nach Qualität des Übergangs kann es zu Schäden kommen. Daher sind an die Schnittflächen und die Schnittgeometrie besondere Anforderungen zu stellen. Insbesondere ist es wichtig, die Ringteile gegen ein Verrutschen zu sichern, damit der Übergang zwischen den Ringteilen möglichst glatt bleibt.

Die US 1,921,488 offenbart einen Lagerring mit zwei Ringteilen, die durch relativ kompliziert geformte und damit nur schwer herzustellende Grenzflächen gegen sowohl radiales als auch axiales Verrutschen gesichert sind.

Es ist daher Aufgabe der vorliegenden Erfindung, einen mehrteiligen Ring für ein Wälzlager und ein Verfahren zu seiner Herstellung anzugeben, mittels dem sich die Ringhälften nach der Montage zum einen nicht mehr gegeneinander verschieben lassen und zum anderen eine Herstellung gegenüber dem bekannten Stand der Technik erheblich vereinfacht werden kann.

Diese Aufgabe wird durch einen Ring für ein Wälzlager mit den Merkmalen des Patentanspruchs 1 und ein Verfahren mit den Merkmalen des Anspruchs 9 gelöst. Vorteilhafte Ausgestaltungen der Erfindung sind Gegenstand der abhängigen Unteransprüche.

Gemäß Patentanspruch 1 wird ein Ring für ein Wälzlager, aufweisend folgende Merkmale, angegeben:
- Der Ring ist mittels wenigstens zweier Schnitte in wenigstens zwei Ringteile geteilt,
- aufgrund der Schnitte weisen die Ringteile Schnittflächen auf,
- die Schnittflächen der wenigstens zwei Schnitte sind gegeneinander derart verkippt, dass sich die Ringteile beim Zusammenfügen gegenseitig axial und radial fixieren
- die Schnittflächen der wenigstens zwei Schnitte verlaufen jeweils durch eine gesamte radiale Dicke des Rings in einer Ebene.

Durch eine derartige Verkippung der Schnittflächen gegeneinander ist sichergestellt, dass eine axiale und/oder radiale Verschiebung der Ringe gegeneinander bei prinzipieller Fixierung mittels eines Gehäuses oder auf einer Welle nicht erfolgen kann. Ferner ist dadurch, dass die Schnittflächen der zwei Schnitte jeweils durch die gesamte radiale Dicke des Rings in einer Ebene verlaufen, eine vergleichsweise einfache Herstellung möglich. Es ist erforderlich, beispielsweise im Falle einer Verwendung als Außenring, die zwei Ringteile nach der Montage des gesamten Wälzlagers in einem Gehäuse zu haltern. Durch die entsprechende erfindungsgemäße Ausbildung der Schnittflächen ist jedoch ein Verschieben der zwei Ringteile gegeneinander im Gehäuse ausgeschlossen. Folglich lässt sich eine zuvor hohe Güte der Schnittkanten, die zu Beschädigungen der Wälzkörper führen könnten auch im Betrieb nutzen. Die Schnittflächen sind bevorzugt jeweils schräg bezüglich der axialen Symmetrieachse des Rings angeordnet, so dass beispielsweise ein radiales Verschieben der beiden Ringteile bezüglich einer der Schnittflächen ein entgegengesetzt wirkendes radiales Verschieben der Schnittflächen auf der gegenüberliegenden Seite auslösen würde. Somit ließen sich die Ringteile gegeneinander bei entsprechender Halterung in einem Gehäuse oder mittels einer Haltevorrichtung nicht verschieben.

In einer bevorzugten Ausführungsform der Erfindung verläuft jeder der Schnitte bezüglich der axialen Richtung schräg durch den Mantel des Rings. Die gegenüberliegenden Schnitte weisen dabei entgegengesetzte Neigungen der Schnittflächen auf. Hierdurch lässt sich insbesondere die axiale Verschiebungssicherung einfach realisieren. So müsste bei einer axialen Verschiebung der Ringteile gegeneinander gleichzeitig eine Drehung der Ringteile möglich sein, was jedoch aufgrund der Einbausituation ausgeschlossen werden kann.

Bevorzugt wird eine Ausgestaltung der Erfindung derart, dass jeder der Schnitte wenigstens zwei in unterschiedlichen Richtungen verlaufende Schnitteile aufweist, wobei die Schnittflächen der Schnittteile gegeneinander verkippt sind. Jeder der Schnitte weist folglich einen Richtungswechsel auf. Dadurch weist beispielsweise jeder der Ringe eine V-förmige Struktur auf, wobei die Schnittflächen entlang der beiden Flügel des V-förmigen Schnittes gegeneinander verkippt sind. Somit wird mittels eines Schnitts bereits ein radiales und axiales Verschieben der beiden Ringteile gegeneinander vermieden.

Die verfahrensbezogene Aufgabe wird mittels eines Verfahrens mit den Merkmalen des Anspruchs 9 gelöst. Das angegebene Verfahren weist folgende Verfahrensschritte auf:
- Schräges Einspannen eines einstückigen Rings in eine Schnittvorrichtung,
- Erzeugen einer ersten Schnittfläche mittels eines Schnittwerkzeugs,
- Verschwenken des Schnittwerkzeugs und
- Erzeugen der zweiten Schnittfläche.

Aufgrund des schrägen Einspannens des zu schneidenden Ringes ist es möglich, sämtliche Schnittflächen mit einem kontinuierlichen Schnittvorgang nacheinander zu erzeugen.

Bevorzugt wird auf jeder Ringseite während eines Schnittvorgangs die Richtung gewechselt und gleichzeitig eine Verschwenkung des Schnittwerkzeugs ausgeführt. Dadurch ergibt sich einerseits die vorteilhafte V-förmige Gestalt des Schnitts, wobei durch die Verschwenkung des Schnittwerkzeugs gegeneinander verkippte Schnittflächen erzeugbar sind. Unmittelbar anschließend an den ersten V-förmigen Schnitt lässt sich der auf der gegenüberliegenden Ringseite zu erzeugende Schnitt einbringen. Dabei ist es besonders vorteilhaft, wenn zunächst die gleiche Schnittrichtung wie am ersten Schnitt beibehalten wird, so dass der Schnittvorgang nicht unterbrochen werden muss. Während die Mantelfläche erneut durchteilt wird, wird wiederum ein Richtungswechsel des Schnittwerkzeuges herbeigeführt und gleichzeitig eine Verschwenkung desselben. Dadurch lassen sich ebenfalls im zweiten Schnitt auf der Mantelfläche zwei verkippte Schnittflächen erzeugen, die V-förmig aneinanderliegen.

Weitere Vorteile und Ausgestaltungen ergeben sich im Zusammenhang mit dem nachfolgend beschriebenen Ausführungsbeispiel anhand der beigefügten Figuren. Es zeigen:
- Figur 1: eine perspektivische Darstellung eines Ausführungsbeispiels der Er- findung und
- Figur 2: das Ausführungsbeispiel der Figur 1 aus einem anderen Blickwinkel.

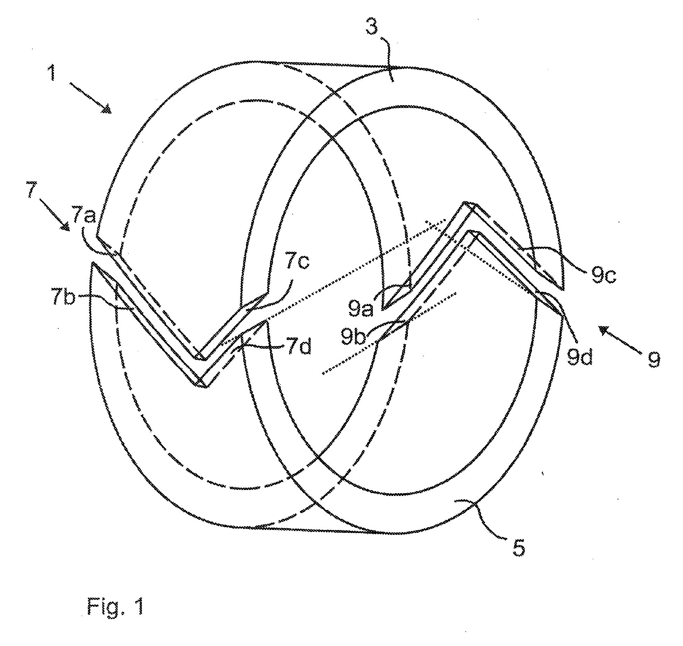

In der Figur 1 ist schematisch in einer perspektivischen Darstellung ein erstes Ausführungsbeispiel der Erfindung dargestellt. Zur bessern Veranschaulichung sind verdeckte Kanten hier grob gestrichelt dargestellt. Ein zweiteiliger Lagerring 1 besteht aus einem ersten Ringteil 3 und einem zweiten Ringteil 5. Die Ringteile 3 und 5 sind in der Darstellung der Figur 1 leicht auseinandergezogen dargestellt, damit die Geometrie der Schnittflächen zu erkennen ist. Der Lagerring 1 ist mittels zweier Schnitte 7 und 9 in die beiden Ringteile 3 und 5 geteilt. Die Schnitte 7 und 9 weisen jeweils einen Richtungswechsel auf, so dass sie im Wesentlichen V-förmig ausgebildet sind, also schräg bezüglich der axialen Richtung verlaufen. Die Schnitte 7 und 9 können beispielsweise durch Schneiden mittels Draht oder Laser, sowie mittels Funkenerosion erzeugt werden. Das Schneidwerkzeug wird beim Schnittvorgang derart schräg eingesetzt, dass die Schnittflächen jeweils schräg bezüglich der radialen Richtung verlaufen.

Jeder der Schnitte 7 bzw. 9 erzeugt somit auf jedem der Ringteile 3 bzw. 5 zwei Schnittflächen 7a, 7b, 7c und 7d bzw. 9a, 9b, 9c und 9d. Dabei bilden die Schnittflächen 7a und 7b, 7c und 7d, bzw. 9a und 9b, sowie 9c und 9d jeweils passgenaue Sitzflächen für die Ringteile 3 und 5, so dass beim Zusammenfügen der Ringteile 3 und 5 ein funktionsfähiger Lagerring 1 entsteht. Die sich bezüglich der axialen Symmetrieachse gegenüberliegenden Schnittflächen 7a und 9a, bzw. 7c und 9c (entsprechendes gilt für die Schnittflächen 7b und 9b bzw. 7d und 9d) sind derart im Raum verkippt, dass sie jeweils zueinander gegenläufig sind. So sind beispielsweise die Schnittflächen 7d und 9d gegeneinander verkippt, was anhand der fein gestrichelten Linien, die innerhalb gedachter Schnittebenen der Schnittflächen 7d und 9d liegen, schematisch dargestellt ist. Gleiches gilt für die Schnittflächen 7b und 7d, die ebenfalls zueinander verkippt sind. Im Gegensatz dazu sind entsprechend die Schnittflächen 7b und 9d zueinander im Wesentlichen parallel ausgerichtet. Gleiches gilt für die Schnittflächen 7b und 9c. Folglich sind alle sich diagonal gegenüberliegenden Schnittflächen im Wesentlichen parallel zueinander ausgerichtet, während alle sich gegenüberliegenden bzw. direkt aneinanderliegenden Schnittflächen gegeneinander verkippt sind.

Die gewählte Geometrie der Schnittflächen 7a bis 7d und 9a bis 9d und ihre entsprechende Lage, sowie die V-förmige Ausführung der Schnitte 7 und 9 führt dazu, dass sich die Ringteile 3 und 5 nach dem Zusammenfügen sowohl axial als auch radial gegenseitig über die Schnittflächen fixieren. Ein axiales Verschieben der Ringteile 3 und 5 zueinander ist nach dem Zusammenbringen nicht mehr möglich, so lange die Ringteile 3 und 5 ihren Abstand zueinander nicht absolut vergrößern können. Sobald die Ringteile 3 und 5 jedoch in einer Einbausituation montiert sind, werden sie gegeneinander fixiert, so dass eine Abhebung des Ringteils 3 vom Ringteil 5, wie in der Figur 1 dargestellt, nicht mehr möglich ist. Durch die geometrische Anordnung der Schnittflächen sind sämtliche anderen Bewegungsmöglichkeiten der Ringteile 3 und 5 zueinander ebenfalls unterbunden. Die Ringteile 3 und 5 können ebenfalls nicht seitlich auseinanderrutschen, da die sich gegenüberliegenden Schnittflächen 7b und 9b bzw. 7d und 9d derart gegeneinander verkippt sind, dass jedes Ringteil bezüglich des anderen stabilisiert wird. Eine Verschiebung der Ringteile ist lediglich bei einer Vergrößerung ihres absoluten Abstandes zueinander möglich.

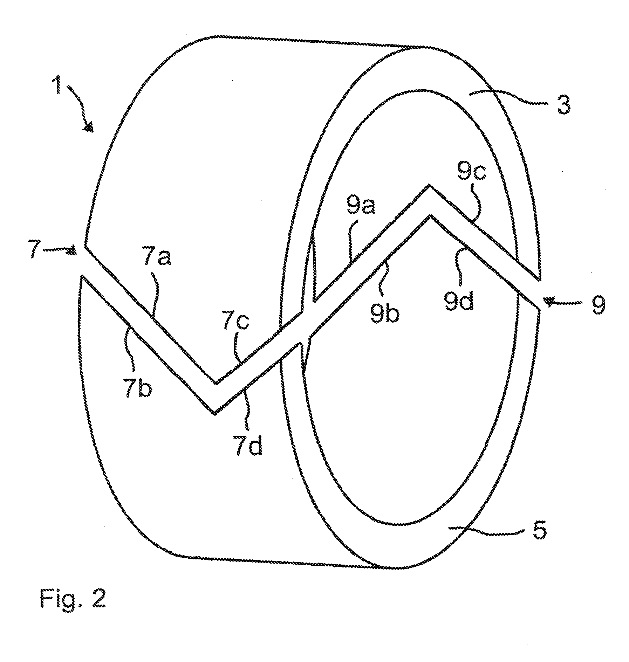

In der Figur 2 sind die Ringteile 3 und 5 des Lagerrings 1 aus einem anderen Blickwinkel dargestellt. Aus dieser Perspektive lässt sich der Schnittvorgang des Lagerrings 1, bei dem die beiden Ringteile 3 und 5 entstehen, auf einfache Weise erläutern. Durch ein schräg gehaltenes Schnittwerkzeug werden zunächst die Schnittflächen 7a und 7b erzeugt. In der Folge wird das Schnittwerkzeug gegenüber der ursprünglichen Einstellung verkippt und die Richtung des Schnitts gewechselt, so dass unmittelbar anschließend die Schnittfläche 7c und 7d erzeugt werden. Durch die schräge Einspannung des Lagerrings in das Werkzeug wird die in der Darstellung hintere Ringseite bei der Herstellung der Schnittflächen 7a bis 7d noch nicht mittels des Schnittwerkzeugs bearbeitet. Unmittelbar anschließend an die Erzeugung der Schnittflächen 7c und 7d werden die Schnittflächen 9a und 9b erzeugt, ohne dass das Schnittwerkzeug einen Lage- oder Richtungswechsel ausführen muss. Nach Beendigung der Erzeugung der Schnittflächen 9a und 9b wird erneut die Richtung und die Ausrichtung des Schnittwerkzeugs gewechselt, so dass es im Wesentlichen wieder in der ursprünglichen Richtung, wie bei der Erzeugung der Schnittflächen 7a und 7b. Mit dieser Einstellung werden die Schnittflächen 9c und 9d erzeugt.

Zudem ist die Länge der Schnittflächen im dargestellten Ausführungsbeispiel verschieden ausgeführt. So ist der die Schnittflächen 9a und 9b bildende Schnitt länger als der die Schnittflächen 9c und 9d bildende Schnitt. Gleiches gilt für die gegenüberliegenden Schnitte, wobei hier sich diagonal gegenüberliegende Schnitte (also z.B. 9a/9b - 7c/7d) unterschiedlichen Längen aufweisen.

Zur Herstellung eines derartigen Lagerrings wird zunächst ein einstückiger Ring nach bekannten Methoden erzeugt und vorzugsweise gehärtet, damit sich beim Härten unter Umständen ergebende Verzüge nicht negativ auf die Ringeigenschaften auswirken. Nach dem Härten wird der Ring bezüglich seiner axialen Symmetrieachse schräg in ein Werkzeug eingespannt. Durch die Schrägstellung wird sichergestellt, dass alle vier Schnitte einzeln in einem durchgehenden Zug erzeugt werden können, wie bereits anhand der Figur 2 erläutert wurde. Somit wird die Mantelfläche des Rings nicht an beiden Seiten gleichzeitig geteilt, sondern nacheinander.

Das Schneiden selbst kann beispielsweise mittels Draht- oder Laserschneiden oder Funkenerosion erfolgen. Dabei ist auf hohe Güte der Schnittkanten zu achten, da aufeinanderliegende Schnittkanten bei montiertem Lagerring im Fall schlechter Qualität die Wälzkörper beschädigen können.

Sobald eine Seite des Rings teilweise durchtrennt ist und folglich ein Teil des ersten V-förmigen Schnitts erzeugt ist, wird das Schneidwerkzeugverschwenkt, so dass die nachfolgende Schnittfläche gegenüber der ersten verkippt eingebracht wird. Nach Erzeugung des vollständigen ersten Schnitts wird die Verkippung des Schneidwerkzeugs und dessen Richtung bei der Bearbeitung beibehalten, so dass auf der gegenüberliegenden Mantelfläche ebenfalls ein Schnitt erzeugt wird. Der Schnitt schließt sich geometrisch direkt an den vorhergehenden an, so dass sich aufgrund der unterschiedlichen Lage im Raum ein entgegengesetzt ausgerichteter Schnitt ergibt, der die gleiche Verkippung aufweist. Während des Schnittvorgangs wird ebenfalls zur Erzeugung des V-förmigen Schnitts die Richtung gewechselt und das Schneidwerkzeug verkippt.

Nachdem Erzeugen der beiden Ringteile, werden diese beispielsweise mittels einer Halteklammer provisorisch zueinander montiert. Anschließend wird mittels eines Schleifprozesses eine Laufbahn für Wälzkörper erzeugt, die je nach Einsatzfeld des Rings innen oder außen anliegt. Durch das nachfolgende Schleifen wird sichergestellt, dass an den Übergängen zwischen den Ringteilen unter Umständen bestehende Vorsprünge oder Kanten angeglichen werden, so dass ein störungsfreier Betrieb des Wälzlagers gewährleistet ist.

### Bezugszeichenliste

- 1: zweiteiliger Lagerring
- 3: erstes Ringteil
- 5: zweites Ringteil
- 7, 9: V-förmige Schnitte
- 7a, 7b, 7c, 7d: Schnittflächen
- 9a, 9b, 9c, 9d: Schnittflächen

## Patentansprüche

1. Ring (1) für ein Wälzlager, aufweisend folgende Merkmale:
- der Ring ist mittels wenigstens zweier Schnitte (7, 9) in wenigstens zwei Ringteile (3, 5) geteilt,
- aufgrund der Schnitte (7, 9) weisen die Ringteile Schnittflächen (7a-7d, 9a-9d) auf,
- die Schnittflächen der wenigstens zwei Schnitte (7, 9) sind gegeneinander derart verkippt, dass sich die Ringteile beim Zusammenfügen gegenseitig axial und radial fixieren,
**dadurch gekennzeichnet, dass**
die Schnittflächen der wenigstens zwei Schnitte jeweils durch eine gesamte radiale Dicke des Rings in einer Ebene verlaufen.

2. Ring nach Anspruch 1, wobei jeder der Schnitte (7, 9) bezüglich der axialen Richtung schräg durch den Mantel des Rings verläuft.

3. Ring nach Anspruch 1 oder 2, wobei jeder der Schnitte (7, 9) wenigstens zwei in unterschiedlichen Richtungen verlaufende Schnitteile aufweist.

4. Ring nach Anspruch 1, 2 oder 3, wobei durch den Richtungswechsel jeder Schnitt (7, 9) wenigstens zwei Schnittteile aufweist und die Schnittflächen der Schnittteile gegeneinander verkippt sind.

5. Ring nach einem der vorherigen Ansprüche, wobei sich bezüglich der radialen Richtung gegenüberliegende Schnittflächen gegeneinander verkippt sind.

6. Ring nach einem der vorherigen Ansprüche, wobei bezüglich eines Mittelpunkts des Rings gegenüberliegende Schnittflächen parallel angeordnet sind.

7. Ring nach einem der vorherigen Ansprüche, wobei die Schnitte unterschiedliche Längen aufweisen.

8. Ring nach einem der vorherigen Ansprüche, wobei bezüglich eines Mittelpunkts des Rings gegenüberliegende Schnittteile gleich lang sind.

9. Verfahren zur Herstellung eines Rings nach einem der Ansprüche 1 bis 8, aufweisend folgende Verfahrenschritte:
- schräges Einspannes eines einstückigen Rings in eine Schnittvorrichtung,
- Erzeugen einer ersten Schnittfläche mittels eines Schnittwerkzeugs,
- Verschwenken des Schnittwerkzeugs,
- Erzeugen der zweiten Schnittfläche.

10. Verfahren nach Anspruch 9, wobei der Ring derart schräg eingespannt wird, dass die beiden Schnittfläche in einem kontinuierlichen Schnittvorgang nacheinander erzeugbar sind.

11. Verfahren nach Anspruch 9 oder 10, wobei vier Schnittflächen erzeugt werden, von denen jeweils zwei zusammenhängend eine Ringseite teilen, wobei bei der Erzeugung zweier zusammenhängender Schnittflächen das Schnittwerkzeug verschwenkt wird.

12. Verfahren nach einem der Ansprüche 9 bis 11, wobei der Ring vor dem Schnittvorgang gehärtet wird.

13. Verfahren nach einem der Ansprüche 9 bis 12, wobei die erzeugten Ringteile nach dem Schnittvorgang zusammengesetzt werden und eine Laufbahn für Wälzkörper durch einen Schleifvorgang erzeugt wird.

## Claims

1. Ring (1) for a rolling bearing, having the following features:
- the ring is divided by means of at least two cuts (7, 9) into at least two ring parts (3, 5),
- owing to the cuts (7, 9), the ring parts have cut surfaces (7a-7d, 9a-9d),
- the cut surfaces of the at least two cuts (7, 9) are tilted in relation to one another in such a manner that, on being joined together, the ring parts are fixed axially and radially with respect to one another,
**characterized in that** the cut surfaces of the at least two cuts each run in a plane through an entire radial thickness of the ring.

2. Ring according to Claim 1, wherein each of the cuts (7, 9) runs through the ring casing obliquely with respect to the axial direction.

3. Ring according to Claim 1 or 2, wherein each of the cuts (7, 9) has at least two cut parts running in different directions.

4. Ring according to Claim 1, 2 or 3, wherein, by means of the change in direction, each cut (7, 9) has at least two cut parts, and the cut surfaces of the cut parts are tilted in relation to one another.

5. Ring according to one of the preceding claims, wherein opposite cut surfaces with respect to the radial direction are tilted in relation to one another.

6. Ring according to one of the preceding claims, wherein opposite cut surfaces with respect to a centre point of the ring are arranged parallel.

7. Ring according to one of the preceding claims, wherein the cuts have different lengths.

8. Ring according to one of the preceding claims, wherein opposite cut parts with respect to a centre point of the ring are equal in length.

9. Method for producing a ring according to one of Claims 1 to 8, having the following method steps:
- obliquely clamping a single-piece ring into a cutting device,
- producing a first cut surface by means of a cutting tool,
- pivoting the cutting tool,
- producing the second cut surface.

10. Method according to Claim 9, wherein the ring is clamped obliquely in such a manner that the two cut surfaces can be produced one after the other in a continuous cutting operation.

11. Method according to Claim 9 or 10, wherein four cut surfaces are produced, of which every two linking together divide one side of the ring, wherein the cutting tool is pivoted when producing two cut surfaces linking together.

12. Method according to one of Claims 9 to 11, wherein the ring is hardened before the cutting operation.

13. Method according to one of Claims 9 to 12, wherein the ring parts produced are assembled after the cutting operation and a raceway for rolling bodies is produced by a grinding operation.

## Revendications

1. Bague (1) pour un palier à roulement, présentant les caractéristiques suivantes :
- la bague est divisée en au moins deux parties de bague (3, 5) au moyen d'au moins deux découpes (7, 9),
- en raison des découpes (7, 9), les parties de bague comprennent des surfaces de découpe (7a-7d, 9a-9d),
- les surfaces de découpe des au moins deux découpes (7,9) sont inclinées les unes par rapport aux autres de telle sorte que, lorsqu'elles sont réunies, les parties de bague soient fixées mutuellement axialement et radialement, **caractérisée en ce que**
les surfaces de découpe des au moins deux découpes s'étendent respectivement dans un plan à travers une épaisseur radiale totale de la bague.

2. Bague selon la revendication 1, dans laquelle chacune des découpes (7, 9) s'étend à travers l'enveloppe de la bague de manière oblique par rapport à la direction axiale.

3. Bague selon la revendication 1 ou 2, dans laquelle chacune des découpes (7, 9) comprend au moins deux parties de découpe s'étendant dans des directions différentes.

4. Bague selon la revendication 1, 2 ou 3, dans laquelle chaque découpe (7, 9) comprend au moins deux parties de découpe grâce au changement de direction et les surfaces de découpe des parties de découpe sont inclinées les unes par rapport aux autres.

5. Bague selon l'une quelconque des revendications précédentes, dans laquelle les surfaces de découpe opposées par rapport à la direction radiale sont inclinées les unes par rapport aux autres.

6. Bague selon l'une quelconque des revendications précédentes, dans laquelle les surfaces de découpe opposées par rapport à un centre de la bague sont disposées parallèlement.

7. Bague selon l'une quelconque des revendications précédentes, dans laquelle les découpes présentent des longueurs différentes.

8. Bague selon l'une quelconque des revendications précédentes, dans laquelle les parties de découpe opposées par rapport à un centre de la bague sont de même longueur.

9. Procédé de fabrication d'une bague selon l'une quelconque des revendications 1 à 8, comprenant les étapes de procédé suivantes :
- serrage oblique d'une bague d'un seul tenant dans un dispositif de découpe,
- production d'une première surface de découpe au moyen d'un outil de découpe,
- pivotement de l'outil de découpe,
- production de la deuxième surface de découpe.

10. Procédé selon la revendication 9, dans lequel la bague est insérée de manière oblique de telle sorte que les deux surfaces de découpe puissent être produites l'une après l'autre dans une opération de découpe continue.

11. Procédé selon la revendication 9 ou 10, dans lequel quatre surfaces de découpe sont produites, parmi lesquelles à chaque fois deux divisent de manière continue un côté de bague, l'outil de découpe étant pivoté lors de la production de deux surfaces de découpe continues.

12. Procédé selon l'une quelconque des revendications 9 à 11, dans lequel la bague est trempée avant l'opération de découpe.

13. Procédé selon l'une quelconque des revendications 9 à 12, dans lequel les parties de bague produites sont assemblées après l'opération de découpe et un chemin de roulement pour des corps de roulement est produit par une opération de meulage.
